# EUROPÄISCHE PATENTANMELDUNG

(11) **EP 3 001 313 A1**
(43) Veröffentlichungstag der Anmeldung: **30.03.2016**
(21) Anmeldenummer: 14185873.8
(22) Anmeldetag: 23.09.2014
(51) Int. Cl.: G06F 9/455

(54) **Verfahren zur Simulation eines Anwendungsprogramms eines elektronischen Steuergeräts auf einem Computer**

(71) Anmelder: dSPACE digital signal processing and control engineering GmbH, 33102 Paderborn (DE)
(72) Erfinder: Holler, Dominik, 33189 Schlangen (DE)

(57) **Zusammenfassung**

Verfahren zur Ausführung eines ersten Anwendungsprogramms eines ersten Steuergerätes auf einem Computer, wobei mittels des ersten Anwendungsprogramms Funktionen zur Steuerung von Aktoren und/oder Sensoren und/oder Funktionen zur Verarbeitung und/oder Bereitstellung von Daten von Aktoren und/oder Sensoren ausgeführt werden, wobei das erste Steuergerät eine Steuergeräte-Hardware mit mindestens einem ersten Rechenkern eines ersten Rechenkern-Typs aufweist, der Computer eine Computer-Hardware (1) mit mindestens einem zweiten Rechenkern eines zweiten Rechenkern-Typs aufweist, wobei sich der erste Rechenkern-Typ und der zweite Rechenkern-Typ zumindest hinsichtlich des verwendeten Befehlssatzes unterscheiden, ein Quellcode eines Steuergeräte-Betriebssystems vorliegt, wobei durch das Steuergeräte-Betriebssystem eine erste Schnittstelle zwischen der Steuergeräte-Hardware und dem ersten Anwendungsprogramm des Steuergerätes ausgebildet wird, ein Quellcode des ersten Anwendungsprogramms vorliegt, der Quellcode des Steuergeräte-Betriebssystems und der Quellcodes des ersten Anwendungsprogramms zur Ausführbarkeit auf dem zweiten Rechenkern-Typ kompiliert werden, wobei durch die Kompilierung ein erstes virtuelles Steuergeräte-Betriebssystem (6) und ein erstes virtuelles Anwendungsprogramm (8) erzeugt werden, wobei der Computer aufweist, eine Simulationsumgebung (7), wobei durch die Simulationsumgebung eine Simulationsumgebungsschnittstelle (9) zur Übergabe eines Datums und/oder eines Ereignisses an das erste virtuelle Anwendungsprogramm (8) und/oder das virtuelle Steuergeräte-Betriebssystem (6) zur Verfügung gestellt wird, und ein Computer-Betriebssystem (5), wobei durch das Computer-Betriebssystem eine zweite Schnittstelle zwischen der Computer-Hardware (1) und der Simulationsumgebung (7) ausgebildet wird, und einen Hypervisor (2), wobei der Hypervisor eine erste virtuelle Maschine (4) des Computers bereitstellt, und durch die erste virtuelle Maschine (4) die Computer-Hardware (1) teilweise oder vollständig in Form von virtueller Hardware zur Verfügung gestellt wird, und die virtuelle Hardware zumindest einen ersten virtuellen Rechenkern umfasst, wobei das virtuelle Steuergeräte-Betriebssystem (6) in der ersten virtuellen Maschine (4) ausgeführt wird, die Simulationsumgebung (7) eine Ausführung des ersten virtuellen Anwendungsprogramms (8) innerhalb des Steuergeräte-Betriebssystems (6) innerhalb der ersten virtuellen Maschine (4) über die Simulationsumgebungsschnittstelle (9) initiiert und steuert, wobei das Steuern die Übergabe von Daten und/oder Ereignissen an das virtuelle Anwendungsprogramm (8) und/oder das virtuelle Steuergeräte-Betriebssystem (6) umfasst, und dem ersten virtuellen Anwendungsprogramm (8) durch das virtuelle Steuergeräte-Betriebssystem (6) ein direkter Zugriff auf die virtuell zur Verfügung gestellte Hardware der ersten virtuellen Maschine (4) bereitgestellt wird.

## Beschreibung

Die Erfindung betrifft ein Verfahren zur Ausführung eines Anwendungsprogramms eines Steuergerätes auf einem Computer gemäß dem Oberbegriff des Patentanspruchs 1.

Im Entwicklungsprozess moderner elektronischer Steuergeräte ist es heutzutage unumgänglich, die Steuergeräte möglichst frühzeitig im Entwicklungsprozess zu testen.

Steuergeräte sind elektronische Module, die überwiegend an Orten eingebaut werden, an denen etwas elektronisch gesteuert oder geregelt wird. Elektronische Steuergeräte werden besonders im Automobilbereich eingesetzt und steuern dort beispielsweise mechanische oder elektrische Aktoren oder werten Sensordaten aus. Steuergeräte zählen zu den eingebetteten Systemen. Auf einem Steuergerät wird ein Anwendungsprogramm z. B. zur Steuerung der Elektronik, zur Verarbeitung von Sensordaten und/oder zur Kommunikation ausgeführt.

Um das Entwicklungsverfahren von Steuergeräten effizient zu gestalten und Fehler so früh wie möglich aufzuspüren, werden die Anwendungsprogramme, die auf dem Steuergerät ausgeführt werden, üblicherweise schon getestet, bevor das Steuergerät als Hardware vorliegt. Diese frühzeitigen Tests sind als "virtual ECU Testing" bzw. als virtueller Steuergerätetest bekannt und z. B. offengelegt in "Virtual Validation with dSPACE", Produktinformation dSPACE, 2014, downloadbar unter http://www.dspace.com/de/gmb/home/products/systems/virtual_ecu_testing.cfm.

Beim virtuellen Steuergerätetest muss das Steuergerät zwar nicht physikalisch vorliegen, jedoch muss der Steuergerätecode in einer hardwareunabhängigen Hochsprache (z. B. C/C++) vorliegen. Im Regelfall unterscheiden sich die Prozessor-/Rechenkernimplementierung der Testeinrichtungen und des zu testenden Steuergeräts. In einer Testeinrichtung auf PC-Basis kommen beispielsweise Intel-Prozessoren als Rechenkerne ersten Typs zum Einsatz, die einen entsprechenden Instruktionssatz (z. B. Intel IA32) aufweisen, wohingegen Steuergeräte meist Mikrocontroller-basiert sind, also einen vom Rechenkern ersten Typs abweichenden Rechenkern zweiten Typs aufweisen, der einen von dem ersten Instruktionssatz abweichenden zweiten Instruktionssatz aufweist (z. B. C166 Instruktionssatz der C166-Mikrocontroller-Familie).

Bisher wird beim virtuellen Steuergerätetest das Anwendungsprogramm als Benutzerprozess des Computer-Betriebssystems (z. B. Windows, MacOS, Linux) auf einem Simulationsrechner bzw. Computer ausgeführt. Benutzerprozesse haben den Nachteil, dass sie in der Regel keine direkte Zugriffsmöglichkeit auf die Computer-Hardware haben, wie beispielsweise Hardwareeinheiten zur Realisierung eines Speicherschutzes.

Vor diesem Hintergrund besteht die Aufgabe der Erfindung darin, ein effizientes Verfahren anzugeben, das den Stand der Technik weiterbildet.

Die Aufgabe wird durch ein Verfahren zur Ausführung eines ersten Anwendungsprogramms eines ersten Steuergerätes auf einem Computer gelöst. Das erste Anwendungsprogramm führt dabei Funktionen zur Steuerung von Aktoren und/oder Funktionen zur Verarbeitung von Sensordaten aus. Das erste Steuergerät weist eine Steuergeräte-Hardware mit mindestens einem ersten Rechenkern eines ersten Rechenkern-Typs auf. Der Computer weist eine Computer-Hardware mit mindestens einem zweiten Rechenkern eines zweiten Rechenkern-Typs auf. Der erste Rechenkern-Typ und der zweite Rechenkern-Typ unterscheiden sich dabei zumindest hinsichtlich des verwendeten Befehlssatzes. Weiterhin liegt ein Quellcode eines Steuergeräte-Betriebssystems vor. Durch das Steuergeräte-Betriebssystem wird eine erste Schnittstelle zwischen der Steuergeräte-Hardware und dem ersten Anwendungsprogramm des ersten Steuergerätes ausgebildet. Des Weiteren liegt ein Quellcode des ersten Anwendungsprogramms vor. Der Quellcode des Steuergeräte-Betriebssystems und der Quellcode des ersten Anwendungsprogramms werden zur Ausführbarkeit auf dem zweiten Rechenkern-Typ kompiliert, wobei durch die Kompilierung ein erstes virtuelles Steuergeräte-Betriebssystem und ein erstes virtuelles Anwendungsprogramm erzeugt werden. Ferner weist der Computer eine Simulationsumgebung auf, wobei durch die Simulationsumgebung eine Simulationsumgebungsschnittstelle zur Übergabe eines Datums und/oder eines Ereignisses an das erste virtuelle Anwendungsprogramm und/oder das virtuelle Steuergeräte-Betriebssystem zur Verfügung gestellt wird. Der Computer weist auch ein Computer-Betriebssystem auf, wobei durch das Computer-Betriebssystem eine zweite Schnittstelle zwischen der Computer-Hardware und der Simulationsumgebung ausgebildet wird. Weiterhin weist der Computer einen Hypervisor auf, wobei der Hypervisor eine erste virtuelle Maschine des Computers bereitstellt, und durch die erste virtuelle Maschine die Computer-Hardware teilweise oder vollständig in Form von virtueller Hardware zur Verfügung gestellt wird. Die virtuelle Hardware umfasst zumindest einen ersten virtuellen Rechenkern. Das virtuelle Steuergeräte-Betriebssystem wird in der ersten virtuellen Maschine ausgeführt. Die Simulationsumgebung initiiert und steuert eine Ausführung des ersten virtuellen Anwendungsprogramms innerhalb des Steuergeräte-Betriebssystems innerhalb der ersten virtuellen Maschine über die Simulationsumgebungsschnittstelle. Das Steuern umfasst die Übergabe von Daten und/oder Ereignissen an das virtuelle Anwendungsprogramm und/oder das virtuelle Steuergeräte-Betriebssystem. Mittels dieses Verfahrens wird dem ersten Anwendungsprogramm durch das virtuelle Steuergeräte-Betriebssystem ein direkter Zugriff auf die virtuell zur Verfügung gestellte Hardware der ersten virtuellen Maschine bereitgestellt.

Ein Vorteil der Erfindung liegt darin, dass das virtuelle Anwendungsprogramm in einer Umgebung ausgeführt wird, die für das virtuelle Anwendungsprogramm geringere Unterschiede zur verwendungsgemäßen Umgebung in einem realen Steuergerät aufweist, als es im Stand der Technik der Fall ist. Insbesondere hat das Computer-Betriebssystem in dem erfindungsgemäßen Verfahren keinen störenden oder einschränkenden Einfluss auf die Ausführung des virtuellen Anwendungsprogramms des Steuergeräts innerhalb des virtuellen Steuergeräte-Betriebssystems. Weiterhin erkennt das zu testende virtuelle Anwendungsprogramm in dem erfindungsgemäßen Verfahren eine virtuelle Hardware in Form einer virtuellen Maschine, die sich für das virtuelle Anwendungsprogramm bzw. für das virtuelle Steuergeräte-Betriebssystem wie die echte physikalische Hardware des Steuergerätes verhält.

Die aus dem Stand der Technik bekannte Methodik der Ausführung des Anwendungsprogramms als Benutzerprozess des Computer-Betriebssystems hat für den Test den Nachteil, dass das Anwendungsprogramm nicht unter dem Betriebssystem ausgeführt wird, unter welchem es auf dem realen Steuergerät korrekt funktionieren muss. Daher können sich beim virtuellen Steuergerätetest keine Fehler offenbaren, die erst durch die Verknüpfung von Anwendungsprogrammen des Steuergeräts mit dem Betriebssystem des Steuergeräts ermöglicht werden. Diese Nachteile werden durch das erfindungsgemäße Verfahren umgangen.

In einer Ausführungsform ist es bevorzugt, dass die durch den Hypervisor bereitgestellte virtuelle Hardware eine Speicherverwaltungseinheit und/oder eine Speicherschutzeinheit des Computers umfasst, und die Speicherverwaltungseinheit und/oder Speicherschutzeinheit durch den direkten Zugriff des Anwendungsprogramms verwendet werden. Das virtuelle Anwendungsprogramm kann somit auf die virtuelle Speicherverwaltungseinheit und/oder Speicherschutzeinheit zugreifen.

Die Ausführung des virtuellen Anwendungsprogramms, im Folgenden auch als virtuelles Steuergerät benannt, unterliegt weiterhin auch Einschränkungen, die durch das PC-Betriebssystem auferlegt werden. So unterbindet das PC-Betriebssystem in der Regel einen direkten Zugriff auf Hardwareelemente, wie z. B. Speicherschutzeinrichtungen (MMU, MPU), da der Speicherschutz des Prozessors vom Betriebssystem verwaltet wird. Außerdem setzt das Computer-Betriebssystem, wie z.B. Microsoft Windows, den Speicherschutz anders um, als dies typischerweise auf einem Steuergerät der Fall wäre. Mittels des direkten Zugriffs des virtuellen Anwendungsprogramms auf die durch den Hypervisor bereitgestellte virtuelle Hardware, welche eine Speicherverwaltungseinheit und/oder Speicherschutzeinheit umfasst, können die Speicherschutzmechanismen in einem virtuellen Steuergerätetest sehr realitätsnah getestet werden.

In einer weiteren Ausführungsform genügt das erste Anwendungsprogramm einer AUTOSAR-Spezifikation, und innerhalb des ersten Anwendungsprogramms werden durch die AUTOSAR-Spezifikation vorgegebene Mechanismen zur Nutzung der Speicherverwaltungseinheit und/oder der Speicherschutzeinheit verwendet.

Die Verwendung von Mechanismen zum Speicherschutz für automobile Steuergeräte ist in AUTOSAR standardisiert. Diese Mechanismen können mit den aus dem Stand der Technik bekannten Methoden zur Ausführung eines Anwendungsprogramms eines Steuergerätes auf einem Computer nicht getestet werden weil kein direkter Zugriff auf die Speicherverwaltungseinheit und/oder der Speicherschutzeinheit ermöglicht wird. Das erfindungsgemäße Verfahren ermöglicht dahingegen ein Testen der AUTOSAR-Mechanismen zum Speicherschutz für automobile Steuergeräte auf einem Computer.

Aktuell ist es nicht die Regel, dass elektronische Steuergeräte Mechanismen für einen Speicherschutz besitzen. In Zukunft wird es allerdings immer wichtiger, die Speicherschutzmechanismen auf elektronischen Steuergeräten zur Verfügung zu stellen, da immer häufiger sicherheitskritische Applikationen neben anderen Applikationen auf demselben Steuergerät ausgeführt werden. Daher sehen heutige Spezifikationen für Steuergeräte-Software (wie z. B. AUTOSAR) auch schon Regeln für die Verwendung dieser Mechanismen vor. Somit erscheint es unabwendbar, dass diese Mechanismen auch bei einer virtuellen Absicherung der Steuergeräte in Zukunft getestet werden müssen, was bislang noch nicht möglich ist, durch die Erfindung aber ermöglicht wird.

In einer erfindungsgemäßen Ausführungsform wird der Hypervisor als Benutzerprozess des Computer-Betriebssystems ausgeführt.

In dieser Ausführungsform wird der Hypervisor als Benutzerprozess innerhalb des Computer-Betriebssystems ausgeführt. Er stellt dem Steuergeräte-Betriebssystem, welches der Spezifikation eines Betriebssystems für Steuergeräte entspricht, eine Replikation des Computers in der Form einer virtuellen Maschine zur Verfügung. Durch die Ausführung des Hypervisors als Benutzerprozess ergibt sich der Vorteil, dass die bereits bestehende Software des Computers nicht verändert werden muss und weiterhin die Simulationsumgebung auf einfache Art mit dem Anwendungsprogramm des Steuergeräts kommunizieren kann.

In einer alternativen Ausführungsform wird dem Hypervisor ein direkter Zugriff auf die Computer-Hardware ermöglicht, und der Hypervisor stellt eine zweite virtuelle Maschine des Computers bereit, und innerhalb der zweiten virtuellen Maschine wird das Computer-Betriebssystem ausgeführt.

In der zuletzt genannten Ausführungsform wird der Hypervisor direkt auf dem physikalisch vorhandenen Computer ausgeführt, und vervielfacht (multiplext) seine Schnittstelle zu mehreren virtuellen Maschinen. Dabei wird eine virtuelle Maschine dem Computer-Betriebssystem zur Verfügung gestellt. Mindestens eine weitere Replikation wird einem geeigneten Steuergeräte-Betriebssystem, welches der Spezifikation eines Betriebssystems für Steuergeräte entspricht, zur Verfügung gestellt. Durch diese Alternative können Vorteile hinsichtlich der Performanz der Programmausführung erreicht werden. Weiterhin können so möglicherweise störende Einflüsse des Computer-Betriebssystems unterbunden werden.

In einer anderen Ausführungsform verwendet das erste Anwendungsprogramm mindestens einen Rechenkern der virtuellen Hardware durch den direkten Zugriff im privilegierten Modus.

Eine Nutzung der CPU im privilegierten Modus von innerhalb des Computer-Betriebssystems ausgeführten Prozessen oder Programmen wird in der Regel durch das Computer Betriebssystem verhindert. Für Anwendungsprogramme von Steuergeräten kann es aber erforderlich sein, die CPU im privilegierten Modus nutzen zu können. Durch das erfindungsgemäße Verfahren wird ein Test dieser privilegierten CPU-Nutzung ermöglicht, da durch den Hypervisor eine direkte Nutzung der (virtuellen) Hardware ermöglicht wird.

Gemäß einer anderen Weiterbildung umfasst das erste Anwendungsprogramm ein erstes Unterprogramm und ein zweites Unterprogramm, wobei das erste Unterprogramm auf dem ersten virtuellen Rechenkern und das zweite Unterprogramm auf einem zweiten virtuellen Rechenkern ausgeführt werden.

In einer anderen Weiterbildung liegt ein Quellcode eines zweiten Anwendungsprogramms zur Ausführung auf dem Steuergerät vor, der Quellcode des zweiten Anwendungsprogramms wird zur Ausführbarkeit auf dem zweiten Rechenkern-Typ kompiliert, wobei durch die Kompilierung ein zweites virtuelles Anwendungsprogramm erzeugt wird, und das erste Anwendungsprogramm auf einem ersten virtuellen Rechenkern und das zweite Anwendungsprogramm auf einem zweiten virtuellen Rechenkern ausgeführt werden.

Durch die beiden zuletzt aufgeführten Weiterbildungen ergibt sich der Vorteil, dass Anwendungsprogramme getestet werden können, die mehrere Kerne eines Prozessors gleichzeitig für verschiedene Prozesse oder Programme verwenden.

In einer zusätzlichen Ausführungsformwird durch die Simulationsumgebung eine Taktrate des ersten virtuellen Rechenkerns und/oder der ersten virtuellen Maschine verändert.

Ein Prozessor eines Computers hat in der Regel eine höhere Performanz als ein Prozessor eines Steuergeräts, und damit auch eine höhere Taktrate. Dies führt zu einer schnelleren Ausführung von Tasks oder Prozessen der Anwendungsprogramme, wenn sie auf einem Computer ausgeführt werden. Die beschriebene Ausführungsform bringt den Vorteil, dass die Taktrate des virtuell zur Verfügung gestellten Prozessors verändert werden kann. Dies bringt den weiteren Vorteil, dass durch eine verlangsamte Taktrate das zeitliche Verhalten des Anwendungsprogramms an das zeitliche Verhalten bei Ausführung auf dem Steuergerät angepasst werden kann.

In einer anderen Ausführungsform weist die Simulationsumgebung eine Simulatorschnittstelle zu einem HIL-Simulator (Hardware-in-the-Loop-Simulator) auf, wobei an den HIL-Simulator ein zweites Steuergerät angeschlossen ist, und Daten zwischen dem zweiten Steuergerät und dem ersten Anwendungsprogramm ausgetauscht werden, wobei der Datenaustausch durch Übertragung elektrischer Signale zwischen dem HIL-Simulator und dem zweiten Steuergerät erfolgt.

Die letztgenannte Ausführungsform ergibt den Vorteil, dass Anwendungsprogramme von Steuergeräten frühzeitig in einem Verbundtest im Rahmen eines Hardware-in-the-Loop-Tests mit realen Steuergeräten getestet werden können. Dies ist dann von Nutzen, wenn noch keine Hardware für das zu testende Steuergerät vorhanden ist und gleichzeitig die Kommunikation mit anderen Steuergeräten getestet werden soll.

Letztlich wird anhand des Tests mittels eines HIL-Simulators auch herausgefunden, ob sich das Anwendungsprogramm unter Echtzeitbedingungen bewährt, ob also z. B. implementierte Algorithmen in den geforderten Abtastintervallen berechnet werden können.

Die HIL-Simulation von realen Steuergeräten hat erkennbar den Vorteil, dass das Verhalten der realen Steuergeräte gefahrlos in einer simulierten Umgebung getestet werden kann. Ebenso offenkundig ist jedoch der Nachteil, dass die realen Steuergeräte als solche überhaupt vorhanden sein müssen, um den Test durchführen zu können. Dies ist deshalb nachteilig, weil die Entwicklung eines Steuergerätes, das in einer Serienanwendung zum Einsatz kommen soll, mit erheblichem Aufwand und Kosten verbunden ist. Wenn sich erst beim Test des realen Steuergeräts herausstellt, dass es bestimmte Anforderungen nicht erfüllt, sind nicht selten erhebliche Anstrengungen erforderlich, die über eine einfache "Nachbesserung" weit hinausgehen, im ungünstigsten Fall muss das Konzept des Steuergeräts vollständig neu überdacht werden, so dass praktisch eine Neuentwicklung des realen Steuergeräts erforderlich ist. die Folge ist, dass zeitliche und kostenmäßige Planungsziele nicht eingehalten werden können.

Mit virtuellen Steuergeräten können sowohl Einzeltests, als auch Verbundtests durchgeführt werden, wobei bei einem Verbundtest ein virtuelles Steuergerät mit mindestens einem weiteren virtuellen oder an einen HIL-Simulator angeschlossenen realen Steuergerät kommuniziert.

Den Testeinrichtungen zum Test eines virtuellen Steuergeräts liegen konzeptionell solche Testeinrichtungen zugrunde, die zum Test eines realen Steuergeräts dienen. Solche Testeinrichtungen dienen zur Durchführung sogenannter Hardware-in-the-Loop-Tests (HIL-Test) von realen Steuergeräten oder eines Verbunds von realen Steuergeräten, die in ihrem Zusammenspiel zu überprüfen sind. Bei realen Steuergeräten handelt es sich vorwiegend um echtzeitfähige Kleinrechner, die zur Beeinflussung eines technischen Prozesses eingesetzt werden. Reale Steuergeräte verfügen demnach über einen Rechenkern, auf dem ein echtzeitfähiges Betriebssystem ausgeführt wird, mit dessen Hilfe regelnde und/oder steuernde Abtastsysteme implementiert sind. Reale Steuergeräte wirken auf den zu beeinflussenden Prozess über eine I/O-Schnittstelle (Input/Output) ein bzw. beziehen über die I/O-Schnittstelle messtechnisch Informationen über den Prozess. Bei dem Test eines realen Steuergeräts mit Hilfe eines HIL-Simulators handelt es sich um den letzten Schritt des Tests eines realen Steuergeräts, bevor es in seiner tatsächlichen Einsatzumgebung zur Anwendung gelangt.

In einer weiteren Ausführungsform des erfindungsgemäßen Verfahrens ist ein zweites Steuergeräte-Betriebssystem des ersten Steuergerätes ausgebildet, der Hypervisor stellt eine dritte virtuelle Maschine bereit, und das zweite Steuergeräte-Betriebssystem wird in einer dritten virtuellen Maschine ausgeführt, und innerhalb des zweiten Steuergeräte-Betriebssystems wird ein drittes Anwendungsprogramm ausgeführt, und die Simulationsumgebung initiiert und steuert eine Ausführung des dritten Anwendungsprogramms innerhalb des zweiten Steuergeräte-Betriebssystem innerhalb der dritten virtuellen Maschine, und dem dritten Anwendungsprogramm wird durch das zweite Steuergeräte-Betriebssystem ein direkter Zugriff auf die virtuell zur Verfügung gestellte Hardware der dritten virtuellen Maschine bereitgestellt.

Aktuelle Entwicklungen im Bereich der Steuergeräte-Entwicklung sehen vor, dass in Zukunft auf Steuergeräten mehrere Betriebssysteme gleichzeitig durch die Verwendung eines Hypervisors ausgeführt werden. Das geschilderte erfindungsgemäße Verfahren macht einen Test dieser virtuellen Maschinen auf Steuergeräten besonders einfach.

Die Erfindung wird nachfolgend unter Bezugnahme auf die Zeichnungen näher erläutert. Hierbei werden gleichartige Teile mit identischen Bezeichnungen beschriftet. Darin zeigt:
- Figur 1: eine schematische Darstellung einer Ausführungsform des erfindungsgemäßen Verfahrens zur Ausführung eines Anwendungsprogramms eines Steuergerätes auf einem Computer,
- Figur 2: eine schematische Darstellung eines Verfahrens zur Ausführung eines Anwendungsprogramms eines Steuergerätes auf einem Computer gemäß dem Stand der Technik,
- Figur 3: eine schematische Darstellung einer alternativen Ausführungsform des erfindungsgemäßen Verfahrens zur Ausführung eines Anwendungsprogramms eines Steuergerätes auf einem Computer,
- Figur 4: eine schematische Darstellung einer weiteren Ausführungsform des erfindungsgemäßen Verfahrens zur Ausführung eines Anwendungsprogramms eines Steuergerätes auf einem Computer,
- Figur 5: eine schematische Darstellung einer zusätzlichen Ausführungsform des erfindungsgemäßen Verfahrens zur Ausführung eines Anwendungsprogramms eines Steuergerätes auf einem Computer.

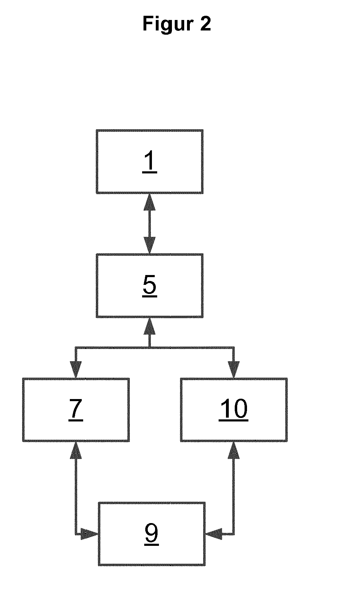

In **Figur 2** ist ein Verfahren zur Ausführung eines Anwendungsprogramms eines Steuergerätes gemäß dem Stand der Technik schematisch dargestellt. Hier wird ein Computer-Betriebssystem (5) auf einer Computer-Hardware (1) ausgeführt. Innerhalb des Computer-Betriebssystems (5) werden eine Simulationsumgebung (7) und ein virtuelles Steuergerät (10) jeweils als Benutzerprozess ausgeführt. Das virtuelle Steuergerät (10) umfasst ein virtuelles Anwendungsprogramm (8) und optional ein virtuelles Steuergeräte-Betriebssystem (6). Die Simulationsumgebung (7) initiiert und steuert die Ausführung des virtuellen Steuergeräts (10) über die Simulationsumgebungsschnittstelle (9), wobei das Steuern die Übergabe von Daten und/oder Ereignissen an das virtuelle Anwendungsprogramm und/oder das virtuelle Steuergeräte-Betriebssystem umfasst. Das virtuelle Anwendungsprogramm hat hier keinen direkten Zugriff auf die Hardware des Computers, da das Computer-Betriebssystem (5) den Zugriff auf die Hardware kapselt.

Aus dem Stand der Technik ist ebenfalls bekannt, dass innerhalb des Computer-Betriebssystems (5) neben der Simulationsumgebung (7) ein virtuelles Steuergerät (10) als Benutzerprozess ausgeführt wird, wobei ein virtuelles Steuergerät ein virtuelles Anwendungsprogramm und optional ein virtuelles Steuergeräte-Betriebssystem (6) umfasst.

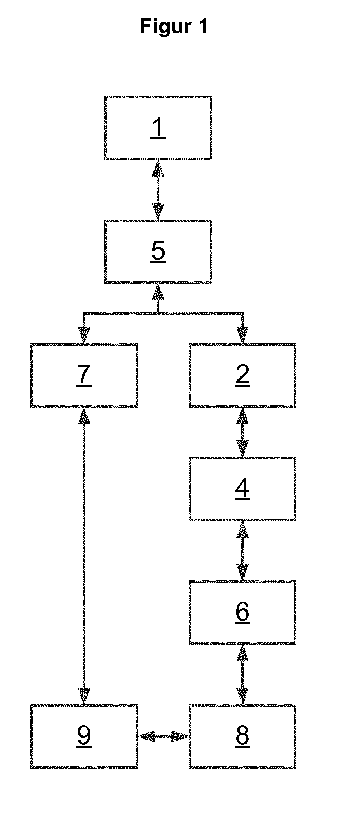

In **Figur 1** ist ein Schema einer Ausführungsform des erfindungsgemäßen Verfahrens zur Ausführung eines Anwendungsprogramms eines Steuergerätes eines Computers dargestellt. Hier wird eine Simulationsumgebung (7) als Benutzerprozess innerhalb eines Computer-Betriebssystems (5) auf einer Computer-Hardware (1) ausgeführt. Parallel zur Simulationsumgebung (7) wird hier auch ein Hypervisor (2), auch bekannt als "virtual machine monitor", als Benutzerprozess auf dem Computer-Betriebssystem (5) ausgeführt.

Der Hypervisor (2) ermöglicht, dass sich mehrere verschiedene Betriebssysteme die Hardware-Ressourcen eines Computers teilen, indem beispielsweise die verfügbaren Kapazitäten von RAMs, Prozessoren und Prozessorkernen inklusive Speicherschutzeinheiten, Ein-/Ausgabe (I/O), DMA-Controller und alle übrigen relevanten Komponenten transparent auf die Gastsysteme aufgeteilt werden. Durch die Replikation der Hardware-Ressource, oder Teilen davon, stellt der Hypervisor die Hardware virtuell in Form einer virtuellen Maschine zur Verfügung. Auf dieser virtuellen Maschine kann direkt ein Betriebssystem ausgeführt werden, das direkt auf die virtuell zur Verfügung gestellte Hardware zugreifen kann.

Erfindungsgemäß erzeugt der Hypervisor (2) eine erste virtuelle Maschine (4), und auf der ersten virtuellen Maschine (4) wird ein virtuelles Steuergeräte-Betriebssystem (6) ausgeführt. Innerhalb des virtuellen Steuergeräte-Betriebssystems wird ein virtuelles Anwendungsprogramm (8) eines Steuergeräts ausgeführt. Durch dieses Verfahren werden die Ausführungen des Computer-Betriebssystems und des virtuellen Steuergeräte-Betriebssystems voneinander entkoppelt, so dass das virtuelle Anwendungsprogramm und/oder das virtuelle Steuergeräte-Betriebssystem direkt auf die virtuell zur Verfügung gestellte Hardware zugreifen können.

Die Prozessorarchitekturen bzw. Befehlssätze von Steuergeräten und von Computern sind üblicherweise unterschiedlich. Daher können Programme für Steuergeräte wie z. B. Betriebssystem, Anwendungsprogramm und anderes, nicht ohne weiteres auf einem Computer ausgeführt werden. Wenn jedoch Quellcodes der Steuergeräte-Programme, beispielsweise in einer Hochsprache wie C, vorliegen, können diese Quellcodes so kompiliert werden, dass sie auf dem Computer-Prozessor ausgeführt werden können. Somit werden ein virtuelles Steuergeräte-Betriebssystem und ein virtuelles Anwendungsprogramm eines Steuergerätes erzeugt. Die Kompilierung kann unabhängig von den restlichen Verfahrensschritten durchgeführt werden und muss auch nicht auf dem gleichen Computer durchgeführt werden, auf dem die Simulationsumgebung ausgeführt wird.

Die Simulationsumgebung 7 kann die Ausführung des virtuellen Anwendungsprogramms steuern und initiieren. Dazu können durch eine Simulationsumgebungsschnittstelle 9 Daten und Ereignisse zwischen dem virtuellen Anwendungsprogramm und der Simulationsumgebung 7 ausgetauscht werden. Somit können von der Simulationsumgebung 7 beispielsweise von einem Umgebungsmodell berechnete Daten oder beliebige Stimulussignale an das virtuelle Anwendungsprogramm geliefert werden und im Gegenzug kann das virtuelle Anwendungsprogramm auch Daten und Ereignisse an die Simulationsumgebung übermitteln. Dabei ist sowohl eine open-loop als auch eine closed-loop Simulation möglich.

Hardwareunabhängige Anwendungsprogramme elektronischer Steuergeräte können auf verschiedenen Prozessorarchitekturen ausgeführt werden. So ist es möglich, die hardwareunabhängige Steuergerätesoftware auch auf dem Prozessor des Computers auszuführen. Der Prozessor des Computers unterstützt typischerweise Speicherschutz. Im Beispiel eines Computers mit x86-Prozessor wird der Speicherschutz von der MMU bereitgestellt. Der Speicherschutz des Prozessors wird vom Computer-Betriebssystem verwaltet. Das typischerweise auf dem Computer ausgeführte universelle Betriebssystem, wie z.B. Microsoft Windows, setzt den Speicherschutz anders um, als dies typischerweise auf einem Steuergerät der Fall wäre. Die Steuergerätesoftware sollte zur realitätsnahen Simulation in einer Umgebung ausgeführt werden, die Speicherschutz wie auf dem Ziel-Steuergerät unterstützt. Um diese Umgebung zu erzeugen, wird ein Steuergeräte-Betriebssystem, welches die Spezifikation des Zielsteuergerätes umsetzt, auf dem Computer ausgeführt. Durch Virtualisierung werden das Computer-Betriebssystem und das virtuelle Steuergeräte-Betriebssystem nebeneinander auf dem Computer des Entwicklers ausgeführt, wobei jedes der beiden Betriebssysteme einen kompletten Computer, einschließlich einer Einheit für den Speicherschutz und/oder einer Einheit für die Verwaltung des Speicherschutzes, erkennt. Das virtuelle Anwendungsprogramm erhält somit einen direkten Zugriff auf die Einheit für den Speicherschutz und/oder die Einheit für die Verwaltung des Speicherschutzes.

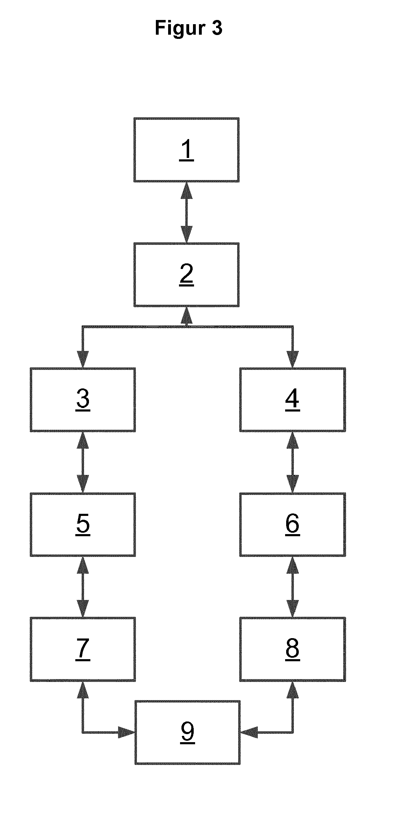

In **Figur 3** ist eine alternative Ausführungsform des erfindungsgemäßen Verfahrens schematisch dargestellt. Hier wird der Hypervisor (2) direkt auf der Hardware des Computers ausgeführt, ohne dass zwischen Hypervisor und Computerhardware ein Betriebssystem ausgeführt wird. Der Hypervisor multiplext seine Schnittstelle zur Computerhardware, er kann also mehrere Replikationen der Computer-Hardware in Form von virtuellen Maschinen bzw. virtueller Hardware bereitstellen. In der in Figur 3 dargestellten Ausführungsform erzeugt der Hypervisor zwei virtuelle Maschinen. Dabei wird auf einer virtuellen Maschine ein Computer-Betriebssystem ausgeführt und auf der anderen virtuellen Maschine wird ein virtuelles Steuergeräte Betriebssystem ausgeführt. Innerhalb des Computer-Betriebssystems wird eine Simulationsumgebung ausgeführt, die über eine Simulationsumgebungsschnittstelle 9 die Ausführung eines virtuellen Anwendungsprogramm initiiert und steuert, das innerhalb des virtuellen Steuergeräte-Betriebssystems ausgeführt wird.

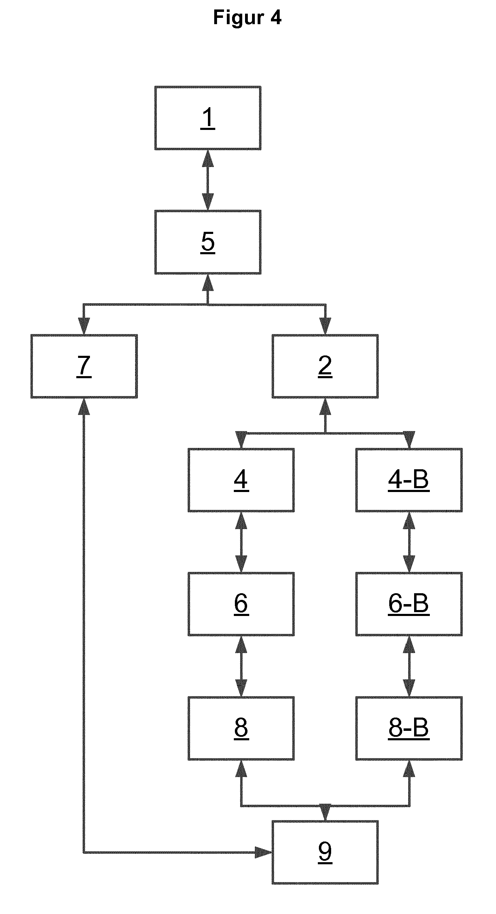

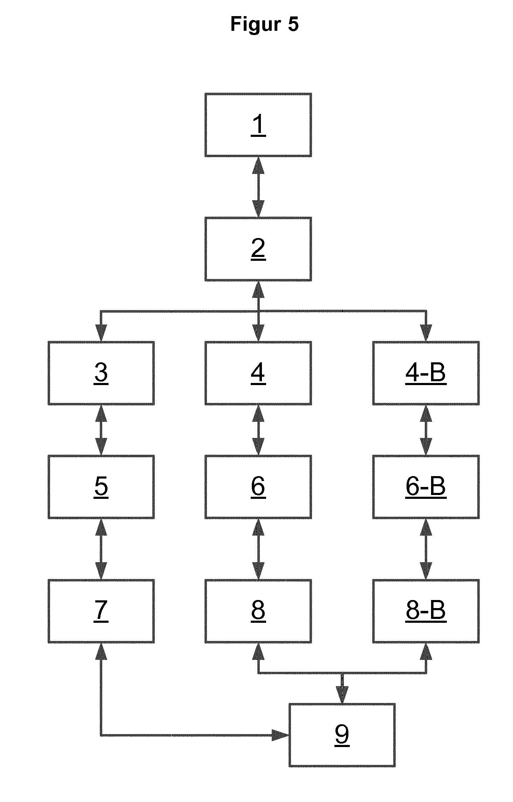

In **Figuren 4** **und** **5** sind alternative Ausführungsformen des erfindungsgemäßen Verfahrens nach Anspruch 11 schematisch dargestellt. Hier wird berücksichtigt, dass ein Hypervisor auch auf einem Steuergerät ausgeführt werden kann, um dort verschiedene Betriebssysteme gleichzeitig für unterschiedliche Anwendungen auszuführen. Dies kann beispielsweise dann sinnvoll sein, wenn ein Steuergerät Aufgaben für Unterhaltungszwecke oder Navigation übernehmen soll und dabei gleichzeitig Fahrzeugdaten auswerten soll oder sogar aktiv in die Fahrzeugsteuerung eingreifen soll. In diesem Fall würden beispielsweise gleichzeitig ein AUTOSAR-Betriebssystem und ein Android-Betriebssystem auf einem Steuergerät in zwei virtuellen Maschinen ausgeführt werden. Um derartige Steuergeräte-Softwarearchitekturen zu testen, kann das erfindungsgemäße Verfahren verwendet werden, wie es in Figuren 4 und 5 schematisch dargestellt ist. Figur 4 ist dabei an Figur 2 angelehnt, wobei der Hypervisor zusätzlich eine zweite virtuelle Maschine (4-B) erzeugt, in der ein zweites virtuelles Steuergerätebetriebssystem (6-B) und ein zweites virtuelles Anwendungsprogramm (8-B) ausgeführt werden. Beide virtuellen Anwendungsprogramme (8 und 8-B) sind über die Simulationsumgebungsschnittstelle 9 mit der Simulationsumgebung 7 verbunden. In einer alternativen Form kann ein vergleichbares Ergebnis auch mit der in Abbildung 5 schematisch dargestellten Ausführungsform erlangt werden. Hier werden das Computer-Betriebssystem und das erste und zweite Steuergeräte-Betriebssystem parallel in 3 virtuellen Maschinen auf dem Computer ausgeführt.

## Patentansprüche

1. Verfahren zur Ausführung eines ersten Anwendungsprogramms für ein erstes Steuergerät auf einem Computer,
wobei mittels des ersten Anwendungsprogramms
Funktionen zur Steuerung von Aktoren und/oder
Funktionen zur Verarbeitung von Sensordaten
ausgeführt werden,
wobei das erste Steuergerät eine Steuergeräte-Hardware mit mindestens einem ersten Rechenkern eines ersten Rechenkern-Typs aufweist,
der Computer eine Computer-Hardware (1) mit mindestens einem zweiten Rechenkern eines zweiten Rechenkern-Typs aufweist, wobei sich der erste Rechenkern-Typ und der zweite Rechenkern-Typ zumindest hinsichtlich des verwendeten Befehlssatzes unterscheiden,
ein Quellcode eines Steuergeräte-Betriebssystems vorliegt, wobei durch das Steuergeräte-Betriebssystem eine erste Schnittstelle zwischen der Steuergeräte-Hardware und dem ersten Anwendungsprogramm des Steuergerätes ausgebildet wird,
ein Quellcode des ersten Anwendungsprogramms vorliegt,
der Quellcode des Steuergeräte-Betriebssystems und der Quellcode des ersten Anwendungsprogramms zur Ausführbarkeit auf dem zweiten Rechenkern-Typ kompiliert werden, wobei durch die Kompilierung ein erstes virtuelles Steuergeräte-Betriebssystem (6) und ein erstes virtuelles Anwendungsprogramm (8) erzeugt werden,
wobei der Computer aufweist,
eine Simulationsumgebung (7), wobei durch die Simulationsumgebung eine Simulationsumgebungsschnittstelle (9) zur Übergabe eines Datums und/oder eines Ereignisses an das erste virtuelle Anwendungsprogramm (8) und/oder das virtuelle Steuergeräte-Betriebssystem (6) zur Verfügung gestellt wird, und
ein Computer-Betriebssystem (5), wobei durch das Computer-Betriebssystem eine zweite Schnittstelle zwischen der Computer-Hardware (1) und der Simulationsumgebung (7) ausgebildet wird, und
einen Hypervisor (2), wobei der Hypervisor eine erste virtuelle Maschine (4) des Computers bereitstellt, und durch die erste virtuelle Maschine (4) die Computer-Hardware (1) teilweise oder vollständig in Form von virtueller Hardware zur Verfügung gestellt wird, und die virtuelle Hardware zumindest einen ersten virtuellen Rechenkern umfasst,
wobei das virtuelle Steuergeräte-Betriebssystem (6) in der ersten virtuellen Maschine (4) ausgeführt wird,
die Simulationsumgebung (7) eine Ausführung des ersten virtuellen Anwendungsprogramms (8) innerhalb des Steuergeräte-Betriebssystems (6) innerhalb der ersten virtuellen Maschine (4) über die Simulationsumgebungsschnittstelle (9) initiiert und steuert, wobei das Steuern die Übergabe von Daten und/oder Ereignissen an das virtuelle Anwendungsprogramm (8) und/oder das virtuelle Steuergeräte-Betriebssystem (6) umfasst, und
dem ersten virtuellen Anwendungsprogramm (8) durch das virtuelle Steuergeräte-Betriebssystem (6) ein direkter Zugriff auf die virtuell zur Verfügung gestellte Hardware der ersten virtuellen Maschine (4) bereitgestellt wird.

2. Verfahren nach Anspruch 1, wobei die durch den Hypervisor (2) bereitgestellte virtuelle Hardware eine Speicherverwaltungseinheit und/oder eine Speicherschutzeinheit des Computers umfasst, und die Speicherverwaltungseinheit und/oder Speicherschutzeinheit durch den direkten Zugriff des virtuellen Anwendungsprogramms (8) verwendet werden.

3. Verfahren nach Anspruch 2, wobei das erste Anwendungsprogramm einer AUTOSAR-Spezifikation genügt, und innerhalb des ersten Anwendungsprogramms durch die AUTOSAR-Spezifikation vorgegebene Mechanismen zur Nutzung der Speicherverwaltungseinheit und/oder der Speicherschutzeinheit verwendet werden.

4. Verfahren nach einem der vorangegangen Ansprüche, wobei der Hypervisor (2) als Benutzerprozess des Computer-Betriebssystems (5) ausgeführt wird.

5. Verfahren nach Ansprüche 1, 2 oder 3, wobei dem Hypervisor (2) ein direkter Zugriff auf die Computer-Hardware (1) ermöglicht wird, und der Hypervisor eine zweite virtuelle Maschine (3) des Computers bereitstellt, und innerhalb der zweiten virtuellen Maschine (3) das Computer-Betriebssystem (5) ausgeführt wird.

6. Verfahren nach einem der vorangegangen Ansprüche, wobei das erste virtuelle Anwendungsprogramm (8) mindestens einen virtuellen Rechenkern der ersten virtuellen Maschine (4) durch den direkten Zugriff in einem privilegierten Modus verwendet.

7. Verfahren nach einem der vorangegangen Ansprüche, wobei das erste virtuelle Anwendungsprogramm (8) ein erstes Unterprogramm und ein zweites Unterprogramm umfasst, wobei das erste Unterprogramm auf dem ersten virtuellen Rechenkern und das zweite Unterprogramm auf einem zweiten virtuellen Rechenkern ausgeführt werden.

8. Verfahren nach einem der vorangegangen Ansprüche, wobei ein Quellcode eines zweiten Anwendungsprogramms zur Ausführung auf dem Steuergerät vorliegt, der Quellcode des zweiten Anwendungsprogramms zur Ausführbarkeit auf dem zweiten Rechenkern-Typ kompiliert wird, wobei durch die Kompilierung ein zweites virtuelles Anwendungsprogramm erzeugt wird, und das erste Anwendungsprogramm auf dem ersten virtuellen Rechenkern und das zweite Anwendungsprogramm auf dem zweiten virtuellen Rechenkern ausgeführt werden.

9. Verfahren nach einem der vorangegangen Ansprüche, wobei durch die Simulationsumgebung (7) eine Taktrate der ersten virtuellen Maschine (4) verändert wird.

10. Verfahren nach einem der vorangegangen Ansprüche, wobei die Simulationsumgebung (7) eine Simulatorschnittstelle zu einem HIL-Simulator aufweist, wobei an den HIL-Simulator ein zweites Steuergerät angeschlossen ist, und Daten zwischen dem zweiten Steuergerät und dem ersten virtuellen Anwendungsprogramm (8) ausgetauscht werden, wobei der Datenaustausch eine Übertragung elektrischer Signale zwischen dem HIL-Simulator und dem zweiten Steuergerät umfasst.

11. Verfahren nach einem der vorangegangenen Ansprüche, wobei ein zweites virtuelles Steuergeräte-Betriebssystem (6-B) des ersten Steuergerätes erzeugt wird ist, der Hypervisor eine dritte virtuelle Maschine bereitstellt, und das zweite virtuelle Steuergeräte-Betriebssystem (6-B) in der dritten virtuellen Maschine (4-B) ausgeführt wird, und innerhalb des zweiten virtuellen Steuergeräte-Betriebssystems (6-B) ein drittes virtuelles Anwendungsprogramm (8-B) ausgeführt wird, und die Simulationsumgebung (7) eine Ausführung des dritten virtuellen Anwendungsprogramms (8-B) innerhalb des zweiten virtuellen Steuergeräte-Betriebssystems (6-B) innerhalb der dritten virtuellen Maschine (4-B) initiiert und steuert, und dass dem dritten virtuellen Anwendungsprogramm (8-B) durch das dritte virtuelle Steuergeräte-Betriebssystem (6-B) ein direkter Zugriff auf die virtuell zur Verfügung gestellte Hardware der dritten virtuellen Maschine (4-B) bereitgestellt wird.
